(19) Europäisches Patentamt
European Patent Office
Office européen des brevets

(11) EP 4 686 923 A1

(12) EUROPÄISCHE PATENTANMELDUNG

(43) Veröffentlichungstag:
04.02.2026  Patentblatt 2026/06

(21) Anmeldenummer: 25192346.2

(22) Anmeldetag: 29.07.2025

(51) Internationale Patentklassifikation (IPC):
G01J 5/48 (2022.01)        G01J 5/80 (2022.01)
G01J 5/00 (2022.01)

(52) Gemeinsame Patentklassifikation (CPC):
G01J 5/48; G01J 5/80; G01J 2005/0077

(84) Benannte Vertragsstaaten:
AL AT BE BG CH CY CZ DE DK EE ES FI FR GB GR HR HU IE IS IT LI LT LU LV MC ME MK MT NL NO PL PT RO RS SE SI SK SM TR
Benannte Erstreckungsstaaten:
BA
Benannte Validierungsstaaten:
GE KH LA MA MD TN

(30) Priorität: 29.07.2024  DE 102024121477

(71) Anmelder: Deutsches Zentrum für Luft- und Raumfahrt e.V.
53227 Bonn (DE)

(72) Erfinder:
• Estevam Schmiedt, Jacob
  51147 Köln (DE)
• Pernpeintner, Johannes
  51147 Köln (DE)

(74) Vertreter: dompatent
Partnerschaft von
Patentanwälten und Rechtsanwälten mbB
Deichmannhaus am Dom
Bahnhofsvorplatz 1
50667 Köln (DE)

(54) **VERFAHREN ZUR IN-SITU-KALIBRATION EINER THERMALKAMERA SOWIE VERFAHREN ZUR VERMESSUNG VON GEBÄUDEN MIT EINER THERMALKAMERA**

(57)     Verfahren zur In-situ-Kalibration einer Thermalkamera (1) mit einem Detektorsystem (7) mit mehreren Detektoren (7a-f) mit folgenden Schritten:

a) Aufnahme eines Thermalbildes eines Objektes (10) mit der Thermalkamera (1),

b) Erzeugen einer Relativbewegung von Thermalkamera (1) und Objekt (10),

c) Aufnahme eines weiteren Thermalbildes des Objektes (10) oder eines Teilbereiches des Objektes (10) mit der Thermalkamera (1),

d) Auswertung der aufgenommenen Thermalbilder, wobei mindestens ein in den Thermalbildern vorhandener identischer Abschnitt (12) des Objektes (10) bestimmt wird,

e) Bestimmen des Detektors (7a-f), der bei Aufnahme der Thermalbilder in dem jeweiligen Thermalbild den bestimmten identischen Abschnitt (12) aufgenommen hat und bestimmen des Detektorsignals des jeweils bestimmten Detektors (7a-f) für das jeweilige Thermalbild, und

f) Bestimmen von Korrelations- und/oder Korrekturwerten aus den Detektorsignalen,

wobei vor Schritt a) oder nach Schritt c), d), oder e) eine Charakterisierung der Thermalkamera (1) erfolgt.

Fig. 1

EP 4 686 923 A1

**Beschreibung**

Die vorliegende Erfindung betrifft ein Verfahren zur In-situ-Kalibration einer Thermalkamera sowie ein Verfahren zur Vermessung von Gebäuden mittels einer Thermalkamera, wobei das Verfahren zur In-situ-Kalibration der Thermalkamera durchgeführt wird.

Thermalkameras bestehen aus einem Gehäuse, einem optischen System aus Linsen und ggf. Filtern sowie einem Detektorsystem. Das Detektorsystem besteht insbesondere aus einer Matrix aus einzelnen Detektoren (sog. Focal Plane Array), die thermischen Strahlungsfluss in ein elektrisches Signal umwandeln. Im Thermalbild, das daraus mithilfe einer Software zusammengesetzt wird, steht jeder Pixel für einen Detektor im Detektorsystem. Thermalkameras werden benutzt, um die Temperatur von Oberflächen zu messen. Um aus den elektrischen Signalen der Detektoren auf die Temperatur der beobachteten Fläche zu schließen, muss das Detektorsystem kalibriert werden. Es muss für jeden Detektor der Zusammenhang zwischen der Stärke des elektrischen Signals und der Temperatur der beobachteten Fläche ermittelt werden. Dabei ist zu beachten, dass die thermische Strahlung nicht ungehindert auf das Detektorsystem trifft. Die Atmosphäre wie auch die Linsen und Filter absorbieren einen kleinen Teil der Strahlung. Gleichzeitig geben diese wie auch das Gehäuse der Thermalkamera selber thermische Strahlung ab, die auch auf die Detektoren trifft und sich zur Strahlung - und damit auch dem elektrischen Signal - durch die beobachtete Fläche addiert. Dieser zusätzliche Strahlungsbeitrag ist nicht für alle Detektoren identisch. Die Detektoren, die näher an der Gehäusewand sind, erhalten einen größeren Beitrag als die in der Mitte der Matrix aus Detektoren. So entsteht ein typischer "Vignetteneffekt".

Thermalkameras werden üblicherweise vom Hersteller im Labor kalibriert. Da sich die Umgebungsbedingungen beim Messeinsatz im Feld aber laufend ändern und sich dies auch auf die Strahlungsbeiträge auswirkt, kann diese Kalibration keine dauerhaft stabile Temperaturmessung gewährleisten. Hinzu kann kommen, dass die Beziehung zwischen empfangener Strahlung und elektrischem Ausgangssignals eines Detektors zeitlich nicht stabil ist. Allgemein werden solche zeitlichen Veränderungen Drift genannt und wurde durch Beobachtungen des Anmelders bestätigt.

Die zuvor beschriebene grundsätzliche Funktion von Thermalkameras gehört zum allgemeinen Kenntnisstand des Anmelders, bezieht sich jedoch nicht auf einen konkreten Stand der Technik.

Thermalkameras können beispielsweise für die Vermessung von Gebäuden verwendet werden, um beispielsweise Wärmelecks an Außenwänden von Gebäuden lokalisieren zu können. Ein weiterer Ansatz wäre eine energetische Charakterisierung an Gebäudehüllen an sich. Um eine Vielzahl von Gebäuden, beispielsweise eines Straßenzugs vermessen zu können, erfolgt jedoch ein Einsatz von einer Thermalkamera über einen relativ langen Zeitraum, sodass aufgrund der Drift vergleichbare Ergebnisse nicht ermittelt werden können oder eine häufige Kalibrierung der Thermalkamera während der Messung erfolgen muss, was einen hohen Zeitaufwand benötigt und bei einigen Thermalkameras sogar vor Ort nicht möglich ist.

Es ist daher Aufgabe der vorliegenden Erfindung, ein vereinfachtes Verfahren zur In-situ-Kalibration einer Thermalkamera zu schaffen, bei dem der zeitliche Aufwand verringert ist und vorzugsweise eine Drift berücksichtigt werden kann. Es ist ferner Aufgabe der vorliegenden Erfindung, ein verbessertes Verfahren zur energetischen Vermessung von Gebäuden mittels einer Thermalkamera zu schaffen.

Das erfindungsgemäße Verfahren zur In-situ-Kalibration einer Thermalkamera ist definiert durch die Merkmale des Anspruchs 1.

Das erfindungsgemäße Verfahren zur energetischen Vermessung von Gebäuden mittels einer Thermalkamera ist definiert durch die Merkmale des Anspruchs 12.

Bei dem erfindungsgemäßen Verfahren zur In-situ-Kalibration einer Thermalkamera mit einem Detektorsystem mit mehreren Detektoren sind folgende Schritte vorgesehen:

a) Aufnahme eines Thermalbildes eines Objektes mit der Thermalkamera,
b) Erzeugen einer Relativbewegung von Thermalkamera und Objekt,
c) Aufnahme eines weiteren Thermalbildes des Objekts oder eines Teilbereichs des Objekts mit der Thermalkamera,
d) Auswertung der aufgenommenen Thermalbilder, wobei mindestens ein in den Thermalbildern vorhandener identischer Abschnitt des Objektes bestimmt wird,
e) Bestimmen des Detektors, der bei Aufnahme der Thermalbilder in dem jeweiligen Thermalbild den bestimmten identischen Abschnitt aufgenommen hat, und Bestimmen des Detektorsignals des jeweils bestimmten Detektors für das jeweilige Thermalbild, und
f) Bestimmen von Korrelations- und/oder Korrekturwerten aus den Detektorsignalen,

wobei vor Schritt a) oder nach Schritt c), d) oder e) eine Charakterisierung der Thermalkamera erfolgt.

Dem erfindungsgemäßen Verfahren liegt die Erkenntnis zugrunde, dass bei einer relativen Bewegung von Thermalkamera und Objekt zwischen zwei Aufnahmen ein identischer Abschnitt des Objektes in den beiden Aufnahmen von unterschiedlichen Detektoren des Detektorsystems der Thermalkamera aufgenommen wird. Unter der Annahme, dass sich die Temperatur des aufgenommenen Abschnitts des Objektes nicht verändert, sollten im Idealfall die Detektorsignale der beiden Detektoren bei beiden Thermalbildern gleich sein. Aufgrund der zuvor beschriebenen zeitlichen Instabilität der Messungen und aufgrund des unterschiedlich hohen Einflusses der Wärmestrahlung des Gehäuses der Kamera auf unterschiedliche Detektoren, können die Signale jedoch unterschiedliche sein.

Mittels der Charakterisierung der Thermalkamera, die beispielsweise eine Kalibrierung sein kann, kann im einfachsten Fall angenommen werden, dass das in Schritt a) aufgenommene Thermalbild aus korrekten oder zumindest annähernd korrekten Detektorsignalen besteht. Für das in Schritt c) aufgenommene weitere Thermalbild kann nun mittels des in Schritt a) aufgenommenen ersten Thermalbilds eine Korrektur des in Schritt c) aufgenommenen weiteren Thermalbildes vorgenommen werden. Dazu wird in den beiden Thermalbildern ein identischer Abschnitt des Objektes bestimmt und ferner jeweils der Detektor, der bei der Aufnahme des jeweiligen Thermalbilds Signale des bestimmten identischen Abschnitts empfangen hat. Durch die Relativbewegung von Thermalkamera und Objekt sind die Detektoren, die den bestimmten identischen Abschnitt in dem jeweiligen Thermalbild aufgenommen haben, unterschiedlich, sodass bei der Bestimmung der Korrelations- und/oder Korrekturdaten vermieden wird, dass bei den beiden Thermalbildern die Detektorsignale des gleichen Detektors verglichen werden. Mit dem erfindungsgemäßen Verfahren kann im einfachsten Fall ein Offset bestimmt werden.

Die Charakterisierung der Thermalkamera muss nicht unmittelbar vor der Durchführung der erfindungsgemäßen Schritte erfolgen, sondern kann auch beispielsweise nach Schritt c) erfolgen. Wenn die Charakterisierung der Thermalkamera beispielsweise unmittelbar nach Schritt c) erfolgt, können Informationen über die Korrektheit der in Schritt c) aufgenommene Aufnahme erhalten werden, sodass dann beispielsweise Korrekturwerte ermittelt werden können, um die in Schritt a) vorgenommene Aufnahme zu korrigieren.

Die Detektorsignale können Rohsignale, wie beispielsweise die elektrische Spannung, oder Temperaturen sein.

Mittels des erfindungsgemäßen Verfahrens können jedoch auch aufwändigere Korrelations- und/oder Korrekturwerte bestimmt werden.

Dazu ist vorzugsweise vorgesehen, dass die Schritte b) und c) bis zum Erreichen einer vorgegebenen Mindestanzahl von Thermalbildern wiederholt werden. Dadurch kann eine größere Datenmenge ermittelt werden, sodass beispielsweise Korrelations- und/oder Korrekturwerte erstellt werden können, die eine Drift berücksichtigen bzw. korrigieren. Die Mindestanzahl von Thermalbildern kann beispielsweise durch die verwendeten Kalibrationsfunktionen vorgegeben sein. Auch kann beispielsweise vorgesehen sein, dass die Anzahl der Thermalbilder dadurch bestimmt wird, bei wie vielen Thermalbildern ein identischer Abschnitt des Objektes enthalten ist.

Das erfindungsgemäße Verfahren kann auch vorsehen, dass Korrelations- und/oder Korrekturwerte für mehrere Detektoren bestimmt werden, was beispielsweise parallel erfolgen kann. Dabei werden in Schritt d) mehrere identische Abschnitte des Objektes bestimmt und die Detektorsignale der entsprechenden Detektoren, die die jeweiligen identischen Abschnitte aufgenommen haben, für die Auswertung verwendet.

Es kann auch vorgesehen sein, dass zumindest die Schritte a) bis c) kontinuierlich durchgeführt werden und bei einer Auswertung verschiedene identische Abschnitte des Objektes oder sogar verschiedene Objekte herangezogen werden können. Wenn beispielsweise in einem Thermalbild das Objekt oder ein Teilbereich des Objekts nicht mehr vorhanden ist, kann in diesem oder in einem der vorhergehenden Thermalbilder ein anderes Objekt und somit ein identischer Abschnitt des neuen Objektes herangezogen werden.

Somit kann sogar vorgesehen sein, dass kontinuierlich Korrelations- und/oder Korrekturwerte bestimmt werden.

Die Relativbewegung von Thermalkamera und Objekt in Schritt b) kann in einer vorgegebenen Richtung und/oder mit einer vorgegebenen Geschwindigkeit erfolgen. Dadurch kann beispielsweise sichergestellt werden, dass für eine vorgegebenen Mindestanzahl von Thermalbildern das Objekt oder ein Teilbereich des Objektes in den Thermalbildern enthalten ist.

Es kann auch vorgesehen sein, dass die Aufnahmen der Thermalbilder mit einer vorgegebenen Aufnahmefrequenz erfolgen. Diese kann beispielsweise auch an die vorgegebene Geschwindigkeit angepasst sein oder die vorgegebene Geschwindigkeit kann an die Aufnahmefrequenz angepasst sein. Dadurch kann einerseits sichergestellt werden, dass in den Thermalbildern das Objekt oder ein Teilbereich des Objektes vorhanden sein, und andererseits kann die Information in Bezug auf die Aufnahmefrequenz, der vorgegebenen Richtung und/oder der vorgegebenen Geschwindigkeit herangezogen werden, um in Schritt d) den identischen Abschnitt des Objektes zu bestimmen.

Die Schritte a), b) und c) können während einer kontinuierlichen Bewegung der Thermalkamera oder des Objekts erfolgen. Durch die kontinuierliche Bewegung kann die Relativbewegung von Thermalkamera und Objekt in Schritt b) bewirkt werden. Es kann somit vorgesehen sein, dass beispielsweise die Thermalkamera verfahrbar ausgestaltet ist und an dem Objekt vorbeigefahren wird.

Die Aufnahme der Thermalbilder in den Schritten a) und c) kann auch in Form eines Videos erfolgen, wobei dann entsprechende Einzelbilder des Videos für die Auswertung in den Schritten d) und e) herangezogen werden.

Bei der Auswertung der aufgenommenen Thermalbilder in Schritt d) kann vorgesehen sein, dass der mindestens eine in den Thermalbildern vorhandenen identische Abschnitt des Objektes mittels Bildverarbeitung, vorzugsweise mittels Objekterkennung oder Segmentierung bestimmt wird. Dies hat den Vorteil, dass für die Auswertung in Schritt d) ausschließlich die Thermalbilder verwendet werden und keine weiteren Daten notwendig sind.

Grundsätzlich kann auch vorgesehen sein, dass bei der Auswertung der aufgenommenen Thermalbilder in Schritt d) der mindestens eine in den Thermalbildern vorhandene identische Abschnitt des Objektes über die vorgegebene Richtung, die vorgegebene Geschwindigkeit und die vorgegebene Aufnahmefrequenz bestimmt wird. Eine derartige Auswertung ist von Vorteil, wenn in den Thermalbildern eine Objekterkennung nicht oder nur unzuverlässig möglich ist oder die Auflösung der Thermalbilder für eine Auswertung in Schritt d) nicht ausreichend ist.

Bei der Charakterisierung der Thermalbilder kann eine Kalibrierung mittels einer Kalibrationsfunktion erfolgen, wobei die Parameter der Kalibrationsfunktion ermittelt werden. Die Kalibrierung kann beispielsweise im Labor erfolgen, sodass Parameter, die die grundsätzlichen Zusammenhänge zwischen dem Signal, das durch eine Wärmestrahlung erfolgt, und der Temperatur unter Laborbedingungen bestimmt werden.

Dabei kann vorgesehen sein, dass die Charakterisierung der Thermalkamera bei einer Referenztemperatur $T_{ref}$ von der Thermalkamera erfolgt. Somit wird die Information erhalten, dass die Parameter der entsprechenden Kalibrierung für eine Referenztemperatur $T_{ref}$ der Thermalkamera gelten, sodass die entsprechenden Einflüsse der Strahlung, die durch Linse, Filter und/oder Gehäuse der Thermalkamera entstehen und von den einzelnen Detektoren des Detektorsystems der Thermalkamera aufgenommen werden, bei der Kalibrierung für die Referenztemperatur $T_{ref}$ berücksichtigt sind.

Ausgehend von dieser Kalibrierung kann dann mittels des erfindungsgemäßen Verfahrens für einzelne Detektoren eine zeitlich abhängige Drift bestimmt werden und in den Korrelations- und/oder Korrekturwerten berücksichtigt werden.

Es kann auch vorgesehen sein, dass bei der Charakterisierung der Thermalkamera eine Messreihenreferenzmessung erfolgt, bei der eine effektive Gehäusetemperatur der Thermalkamera für eine Messreihe bestimmt wird und dass bei dem Bestimmen von Korrelations- und/oder Korrekturwerten aus den Detektorsignalen eine zeitliche Veränderung der Temperatur der Thermalkamera bestimmt wird.

Die verschiedenen Messungen bei der Charakterisierung der Thermalkamera können grundsätzlich an einem Schwarzkörper mit einer bekannten Temperatur, der die gesamte Apertur der Thermalkamera verdeckt, durchgeführt werden.

Bei der Charakterisierung der Thermalkamera kann auch vorgesehen sein, dass Korrekturparameter für den Einfluss der Temperatur der Thermalkamera auf die einzelnen Detektoren bestimmt wird. Ein Signal eines Detektors wird unter anderem durch Strahlung von der Linse, dem Filter und dem Gehäuse der Thermalkamera beeinflusst. Insbesondere der Strahlungsanteil des Gehäuses beeinflusst die Detektoren des Detektorsystems der Thermalkamera in unterschiedlicher Weise, da die am Rand befindlichen Detektoren des Detektorsystems näher an dem Gehäuse sind und somit einen größeren Strahlungsanteil vom Gehäuse erhalten. Durch die Charakterisierung der Thermalkamera können entsprechende Korrekturparameter ermittelt werden, die die Lage der Detektoren berücksichtigen.

Die Erfindung betrifft ferner ein Verfahren zur energetischen Vermessung von Gebäuden, wobei eine Thermalkamera mit einem Detektorsystem mit mehreren Detektoren an einer Reihe von Gebäuden vorbeibewegt wird und eine Aufnahme von Thermalbildern der Gebäude mit einer vorgegebenen Aufnahmefrequenz erfolgt, wobei das erfindungsgemäße Verfahren zur In-situ-Kalibration der Thermalkamera durchgeführt wird.

Im Folgenden werden zwei Varianten der Bestimmung von Korrelations- und/oder Korrekturwerten aus den Detektorsignalen beschrieben.

Als Kalibrationsfunktion zur Korrektur eines Offsets bei der Charakterisierung der Thermalkamera kann

$$T_{obj} = \frac{b}{ln(\frac{r}{S_{obj}} + f)} \qquad (1)$$

verwendet werden, wobei $T_{obj}$ die Temperatur des beobachteten Abschnitts des Objektes ist und $S_{obj}$ das Signal, das durch ihre Wärmestrahlung von dem Detektor, der den beobachteten Abschnitt des Objektes aufnimmt, erzeugt wird. Nun wird das Signal ausgedrückt als

$$S_{obj} = S_D - S_{offset} \qquad (1a)$$

Dabei ist $S_D$ das tatsächlich durch die Wärmestrahlung des beobachteten Abschnitts des Objektes erzeugte Signal und $S_{offset}$ das Offset, das durch Reflexionen und beispielsweise die Strahlung von Linse, Filter und Gehäuse entsteht. Dabei werden entweder die Parameter b, r und f bei einer Vorab-Kalibration im Labor bestimmt und $S_{offset}$ wird während einer Messreihe ermittelt oder aber mehrere Parameter während der Messreihe. Für die Kalibration während einer Messreihe werden dann Kontaktthermometer auf dem beobachteten Abschnitt angebracht. Über einen Fit der Kalibrationsfunktion bei verschiedenen Temperaturen, bei der $T_{obj}$ mit den Kontaktthermometern ermittelt wird, werden die Parameter der Kalibrationsfunktion bestimmt.

Es wird angenommen, dass die Entfernung zwischen Thermalkamera und einem aufzunehmenden Objekt so gering ist, dass der Einfluss der Atmosphäre auf die von den Detektoren empfangene Strahlung vernachlässigbar ist. In diesem Fall setzt sich die vom jeweiligen Detektor empfangene Strahlung zusammen aus der Strahlung, die von einem aufzunehmenden Abschnitt des Objektes ausgeht (hier überlagert sich die emittierte Strahlung ggf. mit reflektierter Strahlung), und Strahlung, die von der Linse und dem Gehäuse ausgeht. Hinzu kommt, dass ein geringer Anteil der von dem Abschnitt ausgehenden Strahlung von der Linse reflektiert oder absorbiert wird, sodass er nicht zum Detektor durchdringt.

Es werden nun zwei mögliche Umsetzungen der Erfindung für dieses Szenario beschrieben. Das Anwendungsszenario ist hier eine Thermalkamera, die auf einem Fahrzeug moniert ist und an einer Reihe von Gebäuden vorbeifährt. Dabei soll die Oberflächentemperatur der Außenwände der Gebäude bestimmt werden. Es wird somit eine Variante des erfindungsgemäßen Verfahrens zur Vermessung von Gebäuden durchgeführt.

1. Variante: Es wird davon ausgegangen, dass in der Kamerasoftware der Thermalkamera eine geeignete Kalibrationsfunktion einschließlich aller benötigten Parameter zur Umrechnung des Detektorsignals in eine Temperatur hinterlegt sind, beispielsweise die zuvor beschriebene Kalibrationsfunktion. Die benötigten Parameter wurden bei einer Referenztemperatur $T_{ref}$ von Gehäuse und Linse bei einer initialen Kalibration während der Charakterisierung der Thermalkamera bestimmt. Haben Gehäuse und Linse nun eine andere Temperatur nahe $T_{ref}$, kann die von der Kamera mit Detektor n gemessene Temperatur beschrieben werden als

$$T_n(t) = \alpha_n T_{obj} + \beta_n\big(T_{h,eff}(t) - T_{ref}\big) \tag{2}$$

wobei $T_{obj}$ die als konstant angenommene Strahlungstemperatur des Objektes am aufzunehmenden Abschnitt ist und $T_{h,eff}$ eine effektive Gehäusetemperatur, die sich aus einer mit dem Emissionsgrad gewichteten Mittelung der Temperaturen von Gehäuse und Linse ergibt und sich mit der Zeit t ändert, wodurch die Drift entsteht. $\alpha_n$ und $\beta_n$ können ebenso bei der Charakterisierung der Thermalkamera mit einem Schwarzkörper im Labor bestimmt werden. Wenn die Aufnahmen relativ schnell nacheinander stattfinden, können die Änderung der effektiven Gehäusetemperatur als linear angenähert werden, d.h.

$$T_{h,eff}(t_{i-1}) = T_{h,eff}(t_i) - \tau_i(t_i - t_{i-1}) \tag{3}$$

$$T_{h,eff}(t_{i+1}) = T_{h,eff}(t_i) + \tau_i(t_i - t_{i-1}) \tag{4}$$

wobei die Zeitschritte hier mit i bezeichnet werden und $\tau_i$ ein zunächst unbekannter Parameter ist. Die Messreihe startet nun mit einer Messreihenreferenzmessung z.B. an einem Schwarzkörper mit bekannter Temperatur, der die gesamte Apertur verdeckt, um die effektive Gehäusetemperatur $T_{h,eff}$ einmal für den Anfang der Messreihe zu bestimmen. Es werden nun aus der folgenden Messreihe immer wieder je drei Thermalbilder ausgewertet, die einen identischen Abschnitt des Objektes enthalten, wobei der identische Abschnitt des Objektes in den Thermalbildern jeweils von einem anderen Detektor aufgenommen wurden. Die drei Thermalbilder liegen in einem Zeitintervall, so dass die Näherung in (3) und (4) gilt und man erhält mit (2) ein lineares Gleichungssystem aus drei Gleichungen mit drei Unbekannten, das nach $T_{obj}$, $\tau_i$ und $T_{h,eff}(t_i)$ aufgelöst werden kann. So wird ein Unterschied im Offset zwischen den drei Detektoren korrigiert. Indem der Ablauf immer wieder wiederholt wird, wird auch ein zeitlich veränderter Offset, also die zeitabhängige Drift, korrigiert. Über die anfängliche Referenzmessung wird so erreicht, dass die gesamte Drift korrigiert werden kann. Die Messreihenreferenzmessung kann dabei auch zu einem anderen Zeitpunkt erfolgen, muss also nicht vorab erfolgen, und wird dann anschließend bei der Auswertung berücksichtigt.

2. Variante: Es wird nun davon ausgegangen, dass unmittelbare Detektorsignale über eine geeignete Software an der Thermalkamera auslesen werden können. Sie sollen nun für jeden Detektor einzeln mit der zuvor beschriebenen Kalibrationsfunktion aus Gleichung (1) in eine Temperatur umgerechnet werden, wobei die Parameter der Funktion sich nun für jeden Detektor unterschiedlich sein können. Die Parameter b, r und f werden vorab im Labor bestimmt. Für das Offset von Detektor n wird mit einer Taylorreihe

$$S_{offset,n} = S_0 + S_1(x_n - x_c) + \frac{1}{2} S_2(x_n - x_c)^2 \tag{5}$$

genähert.

Dabei ist $x_n$ die Position des Detektors und $x_c$ die Position des Zentrums des Detektorsystems. Werden nun vier Aufnahmen erstellt, bei denen unterschiedliche Detektoren dasselbe Flächenelement erfassen, d.h. $T_{obj}$ = const in Gleichung (1), ergibt sich ein Gleichungssystem aus drei Gleichungen mit drei Unbekannten, das nach $S_0$, $S_1$ und $S_2$ aufgelöst werden kann. Somit ist das Offset bestimmt und kann korrigiert werden.

Komplexere Ortsabhängigkeiten von $S_{offset}$ lassen sich mit einer Entwicklung der Taylor-Reihe bis zu höheren Ordnungen und entsprechend mehr Aufnahmen korrigieren. Auch dabei ermöglicht das erfindungsgemäße Verfahren eine Korrektur der gesamten Drift, wenn am Anfang (oder auch zu einem anderen Zeitpunkt) der Messung ein Messreihenreferenzmessung erstellt wird, bei dem die Thermalkamera die korrekten Objekttemperaturen misst.

Im Folgenden wird unter Bezugnahme auf die nachfolgenden Figuren die Erfindung näher erläutert. Es zeigen

Figur 1    eine Thermalkamera bei der Aufnahme eines ersten Thermalbildes eines Objekts und

Figur 2    die Thermalkamera bei der Aufnahme eines zweiten Thermalbildes des Objekts.

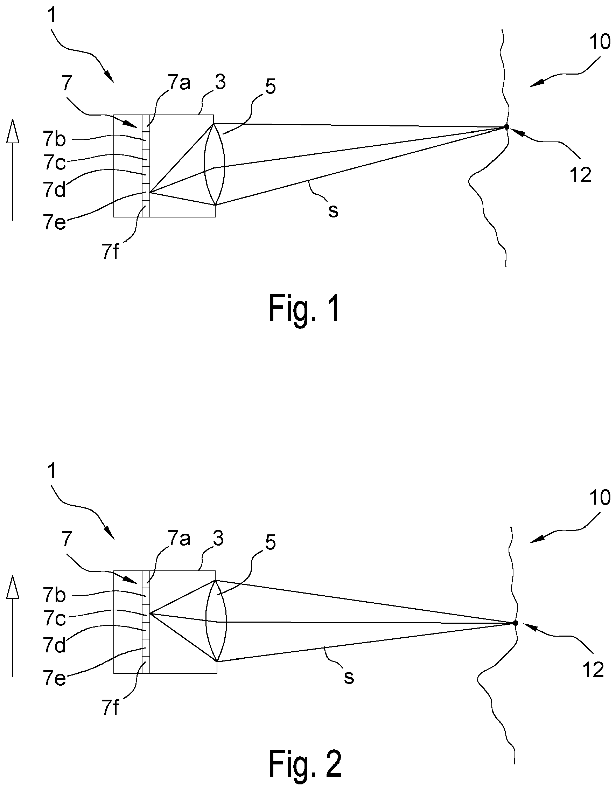

In Fig. 1 ist eine Thermalkamera 1 dargestellt, bei der Aufnahme eines Thermalbildes eines Objektes 10. Die Thermalkamera 1 weist ein Gehäuse 3, eine Linse 5 und ein Detektorsystem 7 auf. Das Detektorsystem 7 besteht aus einem Array aus mehreren Detektoren 7a-f.

In Fig. 1 nimmt die Thermalkamera 1 das Objekt 10 auf, wobei Wärmestrahlung S des Abschnitts 12 von der Linse 5 auf den Detektor 7e des Detektorsystems 7 gelenkt wird und dieser ein Detektorsignal erzeugt, das in eine Temperatur umgerechnet wird.

Wie durch den Pfeil angedeutet ist, wird die Thermalkamera 1 relativ zu dem Objekt 10 bewegt. In Fig. 2 ist eine Situation dargestellt, in der die Thermalkamera 1 gegenüber der Fig. 1 weiterbewegt ist und ein weiteres Thermalbild des Objekts 10 aufgenommen wird. Die Wärmestrahlung S des Abschnitts 12 wird nun von der Linse 5 auf den Detektor 7c des Detektorsystems 7 gelenkt, sodass der Detektor 7c ein Detektorsignal für den Abschnitt 12 des Objekts 10 erzeugt.

Bei den in den Situationen der Fign. 1 und 2 aufgenommenen Thermalbildern kann nun gemäß dem erfindungsgemäßen Verfahren der Abschnitt 12 als identischer Abschnitt in dem Objekt 10 bestimmt werden. Dies kann beispielsweise über Bilderkennung erfolgen. Anschließend kann der entsprechende Detektor (bei der Aufnahme in der Situation der Fig. 1 der Detektor 7e, bei Fig. 2 der Detektor 7c) bestimmt werden, der die Wärmestrahlung S des Abschnitts 12 empfängt. Über die Detektorsignale der Detektoren 7e und 7c können dann Korrelations- und/oder Korrekturwerte bestimmt werden.

**Bezugszeichenliste**

1      Thermalkamera
3      Gehäuse
5      Linse
7      Detektorsystem
7a-f   Detektoren
10    Objekt
12    Abschnitt
S     Wärmestrahlung

**Patentansprüche**

1. Verfahren zur In-situ-Kalibration einer Thermalkamera (1) mit einem Detektorsystem (7) mit mehreren Detektoren (7a-f) mit folgenden Schritten:

a) Aufnahme eines Thermalbildes eines Objektes (10) mit der Thermalkamera (1),
b) Erzeugen einer Relativbewegung von Thermalkamera (1) und Objekt (10),
c) Aufnahme eines weiteren Thermalbildes des Objektes (10) oder eines Teilbereiches des Objektes (10) mit der Thermalkamera (1),
d) Auswertung der aufgenommenen Thermalbilder, wobei mindestens ein in den Thermalbildern vorhandener identischer Abschnitt (12) des Objektes (10) bestimmt wird,
e) Bestimmen des Detektors (7a-f), der bei Aufnahme der Thermalbilder in dem jeweiligen Thermalbild den bestimmten identischen Abschnitt (12) aufgenommen hat und bestimmen des Detektorsignals des jeweils bestimmten Detektors (7a-f) für das jeweilige Thermalbild, und
f) Bestimmen von Korrelations- und/oder Korrekturwerten aus den Detektorsignalen,

wobei vor Schritt a) oder nach Schritt c), d), oder e) eine Charakterisierung der Thermalkamera (1) erfolgt.

2. Verfahren nach Anspruch 1, **dadurch gekennzeichnet, dass** die Schritte b) und c) bis zum Erreichen einer vorgegebenen Mindestanzahl von Thermalbildern wiederholt werden.

3. Verfahren nach Anspruch 1 oder 2, **dadurch gekennzeichnet, dass** die Relativbewegung von Thermalkamera (1) und Objekt (10) in Schritt b) in eine vorgegebene Richtung und/oder mit einer vorgegebenen Geschwindigkeit erfolgt.

4. Verfahren nach einem der Ansprüche 1 bis 3, **dadurch gekennzeichnet, dass** die Aufnahme der Thermalbilder mit einer vorgegebenen Aufnahmefrequenz erfolgt.

5. Verfahren nach Anspruch 3 oder 4, **dadurch gekennzeichnet, dass** die Schritte a) b) und c) während einer kontinuierlichen Bewegung der Thermalkamera (1) oder des Objekts (10) erfolgt, wobei die kontinuierliche Bewegung die Relativbewegung von Thermalkamera (1) und Objekt (12) in Schritt b) bewirkt.

6. Verfahren nach einem der Ansprüche 1 bis 5, **dadurch gekennzeichnet, dass** bei der Auswertung der aufgenommenen Thermalbilder in Schritt d) der mindestens eine in den Thermalbildern vorhandene identische Abschnitt (12) des Objektes (10) mittels Bildverarbeitung, vorzugsweise mittels Objekterkennung oder Segmentierung, bestimmt wird.

7. Verfahren nach einem der einem der vorangegangenen Ansprüche, **dadurch gekennzeichnet, dass** bei der Auswertung der aufgenommenen Thermalbilder in Schritt d) der mindestens eine in den Thermalbildern vorhandene identische Abschnitt (12) des Objektes (10) über die vorgegebene Richtung, die vorgegebene Geschwindigkeit und die vorgegebene Aufnahmefrequenz bestimmt wird.

8. Verfahren nach einem der Ansprüche 1 bis 7, **dadurch gekennzeichnet, dass** bei der Charakterisierung der Thermalkamera (1) eine Kalibrierung mittels einer Kalibrationsfunktion erfolgt, wobei die Parameter der Kalibrationsfunktion ermittelt werden.

9. Verfahren nach Anspruch 8, **dadurch gekennzeichnet, dass** die Charakterisierung der Thermalkamera (1) bei einer Referenztemperatur $T_{ref}$ von der Thermalkamera (1) erfolgt.

10. Verfahren nach einem der Ansprüche 1 bis 9, **dadurch gekennzeichnet, dass** bei der Charakterisierung der Thermalkamera (1) eine Messreihenreferenzmessung erfolgt, bei der eine effektive Gehäusetemperatur $T_{h,eff}$ der Thermalkamera (1) für eine Messreihe bestimmt wird, und dass bei dem Bestimmen von Korrelations- und/oder Korrekturwerten aus den Detektorsignalen eine zeitliche Veränderung der Temperatur der Thermalkamera (1) bestimmt wird.

11. Verfahren nach einem der Ansprüche 8 bis 10, **dadurch gekennzeichnet, dass** bei der Charakterisierung der Thermalkamera (1) Korrekturparameter für den Einfluss der Temperatur der Thermalkamera (1) auf die einzelnen Detektoren bestimmt wird.

12. Verfahren zur energetischen Vermessung von Gebäuden, wobei eine Thermalkamera (1) mit einem Detektorsystem (7) mit mehreren Detektoren (7a-f) an einer Reihe von Gebäuden vorbeibewegt wird und eine Aufnahme von Thermalbildern der Gebäude mit einer vorgegebenen Aufnahmefrequenz erfolgt, wobei das Verfahren zur In-situ-Kalibration der Thermalkamera (1) nach einem der Ansprüche 1 bis 10 durchgeführt wird.

Fig. 1

Fig. 2

EUROPÄISCHER RECHERCHENBERICHT

Nummer der Anmeldung

EP 25 19 2346

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 4 109 394 A2 (STRATASYS POWDER PRODUCTION LTD [GB]) 28. Dezember 2022 (2022-12-28) * Abbildungen 1-5, 7, 8 * ----- | 1-12 | INV. G01J5/48 G01J5/80 G01J5/00 |
| X | RUSSELL C. HARDIE ET AL: "Scene-based nonuniformity correction with video sequences and registration", APPLIED OPTICS, Bd. 39, Nr. 8, 10. März 2000 (2000-03-10), Seiten 1241-5160, XP055261927, US ISSN: 0003-6935, DOI: 10.1364/AO.39.001241 * das ganze Dokument * ----- | 1-12 | |

RECHERCHIERTE SACHGEBIETE (IPC)

G01J

Der vorliegende Recherchenbericht wurde für alle Patentansprüche erstellt

| Recherchenort | Abschlußdatum der Recherche | Prüfer |
|---|---|---|
| München | 11. November 2025 | Haan, Martine |

EPO FORM 1503 03.82 (P04C03)

**EP 4 686 923 A1**

## ANHANG ZUM EUROPÄISCHEN RECHERCHENBERICHT
## ÜBER DIE EUROPÄISCHE PATENTANMELDUNG NR.

EP 25 19 2346

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-11-2025

| Im Recherchenbericht angeführtes Patentdokument | Datum der Veröffentlichung | Mitglied(er) der Patentfamilie | Datum der Veröffentlichung |
|---|---|---|---|
| EP 4109394 A2 | 28-12-2022 | EP 4109394 A2 | 28-12-2022 |
| | | GB 2607575 A | 14-12-2022 |
| | | US 2022383460 A1 | 01-12-2022 |

Für nähere Einzelheiten zu diesem Anhang : siehe Amtsblatt des Europäischen Patentamts, Nr.12/82